# EUROPEAN PATENT APPLICATION

(11) **EP 4 715 248 A1**
(43) Date of publication of application: **25.03.2026**
(21) Application number: 24200973.6
(22) Date of filing: 18.09.2024
(51) Int. Cl.: F16L 37/56, F16L 41/03, F28F 9/02, H01M 10/613, H01M 10/625, H01M 10/6556, H01M 10/6568

(54) **A COOLANT MANIFOLD FOR A COOLING SYSTEM OF AN ELECTRICAL ENERGY STORAGE PACK**

(71) Applicant: VOLVO TRUCK CORPORATION, 405 08 Göteborg (SE)
(72) Inventor: LINDELÖW, Fredrik, 541 94 SKÖVDE (SE); JOHNSON, Christoffer, 445 55 SURTE (SE)
(74) Representative: Kransell & Wennborg KB

(57) **Abstract**

A coolant manifold (100) connectable to a cooling system (102) of an electrical energy storage pack (104), the coolant manifold comprising: a coolant channel (110) comprising a main channel (112) and a set of distribution channels (114) fluidly connected with the main channel (112) and configured to be fluidly connected with the cooling system (102), a container (116) configured to hold the coolant channel, the container comprising a base (118) configured to hold the main channel (112), and a set of extensions (120) from the base (118) configured to hold the distribution channels (114) of the coolant channel (110), the extensions each having an end opening (122) opposite from the base; a lid (126) configured to cover an opening (124) of at least the base (118) of the container (116); a set of end caps (130) configured to seal the end openings (122) of the extensions (120) of the container (116), and to partly overlap with the lid, and a sealant that at least partly fills a space inside the container (116).

## Description

### TECHNICAL FIELD

The disclosure relates generally to cooling of electrical energy storage packs. In particular aspects, the disclosure relates to a coolant manifold arrangeable to provide coolant to a cooling system of an electrical energy storage pack. The disclosure can be applied to heavy-duty vehicles, such as trucks, buses, and construction equipment, among other vehicle types such as passenger cars and marine vessels. Although the disclosure may be described with respect to a particular vehicle, the disclosure is not restricted to any particular vehicle. The disclosure can further be applied to stationary and industrial applications.

### BACKGROUND

Cooling of electrical energy storage systems is crucial for proper and safe operation. As is often the case, a coolant is distributed to near cells of the cooling system to transfer heat away from the cells. However, an internal coolant manifold in an electrical energy storage pack can be prone to leakage which may lead to a thermal runaway by short circuits. Furthermore, it is desired to maintain electrical energy storage packs airtight which complicates using drains for liquid to the environment outside the electrical energy storage pack.

### SUMMARY

According to a first aspect of the disclosure, there is provided a coolant manifold connectable to a cooling system of an electrical energy storage pack, the coolant manifold comprising: a coolant channel comprising a main channel and a set of distribution channels configured to be fluidly connected with the main channel and configured to be fluidly connected with the cooling system, a container configured to hold the coolant channel, the container comprising a base configured to hold the main channel, and a set of extensions from the base configured to hold the distribution channels of the coolant manifold, the extensions each having an end opening opposite from the base; a lid configured to cover an opening of at least the base of the container; a set of end caps configured to seal the end openings of the extensions of the container, and to partly overlap with the lid, and a sealant that at least partly fills a space inside the container.

The first aspect of the disclosure may seek to reduce the risk that coolant reaches high voltage parts in the electrical energy storage pack in case of a leak in the coolant channel. A technical benefit may include increased safety and operation reliability. For example, the risk of thermal runaway due to leaking coolant causing a short circuit is reduced by sealing the cooling distribution channel in an outer shield provided by the container, lid and end caps of the manifold. An advantage of the first aspect is that coolant connections to the coolant channel can be sealed by the sealant, greatly reducing the risk of a leak outside the container. Furthermore, the first aspect provides for a redundancy system in case of leakage.

The coolant channel with its main channel and the distribution channel may be tubes or pipes or hoses that can transfer cooling liquid. The generally outline of the coolant channel is such that it may be laid down and fitted in the container of the coolant manifold. That is, their overall shapes are generally similar, so that the container can accommodate the coolant channel.

Optionally in some examples, including in at least one preferred example, the end caps may be configured to slide into the extensions of the container. A technical benefit may include relatively simple assembly that can provide the overlap with the lid to further reduce the risk of leakage.

Optionally in some examples, including in at least one preferred example, wherein the end caps may comprise an opening for feedthrough of connection channels configured as a fluid connections between the distribution channels and the cooling system. The connection channels connect to the distribution channels to lead coolant outside the container or to receive coolant from the cooling system. By connecting the connection channels inside the end caps advantageously allows for sealing the connection joints inside the container, thereby further reducing the risk of leakage.

Optionally in some examples, including in at least one preferred example, a spigot of the distribution channels configured to be fitted with connection channels are housed inside the end caps. The spigots may be covered in the sealant thereby further reducing the risk of leakage.

Optionally in some examples, including in at least one preferred example, the opening in the end cap may be a slot that reach from a first end of the end cap towards a second end opposite from the first end, the slot overlaps with an opening in the extensions of the container to form the feedthrough. A technical benefit is that the end cap can be slid onto the extensions of the container with varying depths and still allow for a feedthrough. That is, a perfect fitted match between the end cap and the extension is not required for obtaining the feedthrough.

Optionally in some examples, including in at least one preferred example, the ends caps may be arranged on top of the lid at the overlap between the end caps and the lid. Advantageously, a sealant added to the end cap can more easily reach the interface between the end cap and the lid with the end cap being on top, thereby providing for more reliable sealing.

Optionally in some examples, including in at least one preferred example, wherein at least spaces of the end caps may be filled with the sealant. A technical benefit may be that connections that are made inside the end caps will be sealed with the sealant which reduces the risk of leakage from the connections where leaked is more prone to occur.

Optionally in some examples, including in at least one preferred example, the container may further comprise an edge that is configured to connect with the lid to lock the lid on the container. The edge serves as a mechanical stop for motion of the lid relative to the container in one direction. A technical advantage is to secure the lid to the container and make sure it does not is displaced due to for example vibrations. The edge connection may further provide for a seal to further prevent coolant from escaping the manifold and entering the electrical energy storage pack, which could lead to short circuits or thermal runaway.

The end caps may advantageously also be connected to an edge. That is, one and the same edge configuration of the container allows for connecting both the lid and the end caps.

Optionally in some examples, including in at least one preferred example, wherein the end caps may comprise a through-hole configured to receive the sealant for at least partly filling the space. The through-hole provides for simplified and reliable assembly which can ensure that the sealant fully penetrates the end caps.

Notably, the sealant may be added through other inputs or to the end caps before attaching the end cap to the extensions. Other inputs may for example include the feedthrough for the connection channel to the cooling system.

Optionally in some examples, including in at least one preferred example, the coolant manifold may be arranged inside a housing of the electrical energy storage pack.

There is further provided an electrical energy storage pack comprising a cooling system for the electrical energy storage packs and the coolant manifold according to examples herein.

Optionally in some examples, including in at least one preferred example, the cooling system may comprise cooling plates arranged to cool electrical energy storage cells of the electrical energy storage pack, the coolant being provided from the distribution channels to the cooling plates. Cooling plates are efficient in cooling of electrical energy storage cells. For example, the cooling plates may be interleaved between electrical energy storage cells in a stacked manner.

There is further provided a vehicle comprising the electrical energy storage pack according to examples herein.

According to a second aspect of the disclosure, there is provided a method for assembling a coolant manifold connectable to a cooling system of an electrical energy storage pack, the method comprising: providing a coolant channel comprising a main channel and a set of distribution channels configured to be fluidly connected with the main channel and configured to be fluidly connected with the cooling system from their outlets, providing a container comprising a base and a set of extensions from the base, the extensions each having an end opening opposite from the base; arranging the coolant channel in the container with the main channel in the base and the distribution channels in the extensions of the container, closing an opening of at least the base of the container with a lid, arranging a set of end caps to seal the end openings of the extensions of the container, and to partly overlap with the lid, and filling at least part of a space inside the container with a sealant.

The second aspect of the disclosure may seek to assemble a coolant manifold that provide a reduce the risk that coolant reaches high voltage parts in the electrical energy storage pack in case or a leak in the coolant channel. A technical benefit may include precise and controlled assembly of a cooling manifold that can lead to increased safety and operation reliability. For example, the risk of thermal runaway due to leaking coolant causing a short circuit is reduced by sealing the cooling distribution channel in an outer shield provided by the container. An advantage of the second aspect is that coolant connections to the coolant channel may be sealed by the sealant, greatly reducing the risk of a leak outside the container. Furthermore, the second aspect of the disclosure provides a redundancy system in case of leakage.

Optionally in some examples, including in at least one preferred example, the method may comprise sliding the set of ends caps into the extensions of the container. A technical advantage may be easier alignment between the end caps and the container extensions. This may further reduce the risk of leakage in the assembled coolant manifold. It may further reduce the time for assembly of the coolant manifold.

Optionally in some examples, including in at least one preferred example, the method may comprise: filling the sealant to at least cover a spigot of the distribution channels fitted with connection channels inside the end caps. A technical benefit is that the risk of leakage at the spigot is reduced.

Optionally in some examples, including in at least one preferred example, the method may comprise: filling of the space with sealant subsequently to arranging the end caps at the end openings of the extensions. A technical benefit may be that this allows for precise and controlled application of the sealant, ensuring that the sealant reaches all necessary areas within the manifold, particularly after all components are in place. This approach minimizes the risk of voids or incomplete sealing, thereby further reducing the risk of leakage.

Optionally in some examples, including in at least one preferred example the sealant may be a curable fluid. A technical benefit may be that the fluid can flow into necessary areas inside the end caps and container, filling voids and spaces before it cures and provides a barrier against leakage.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary coolant manifold arranged to provide coolant to a cooling system of an electrical energy storage pack of a vehicle according to an example.
**FIG. 2** is an exploded view of a coolant manifold according to an example.
**FIG. 3A** is a top view of an extension of a container partly closed by the lid and an end cap according to an example.
**FIG. 3B** is a bottom view of the extension of the container and the end cap according to an example.
**FIG. 4A** illustrates a top view of the extension of the container closed by the lid and the end cap according to an example.
**FIG. 4B** illustrates a bottom view of the extension of the container closed by the lid and the end cap according to an example.
**FIG. 5** is a flow-chart of a method for assembling a coolant manifold according to an example.

### DETAILED DESCRIPTION

The detailed description set forth below provides information and examples of the disclosed technology with sufficient detail to enable those skilled in the art to practice the disclosure.

Electrical energy storages for electric vehicles are most typically equipped with a cooling system where a cooling liquid is used for transferring heat away from the electrical energy storage. A manifold is used for distributing cooling liquid to multiple cooling devices located in different places in the electrical energy storage. However, leaks in the internal coolant manifold can lead to coolant reaching sensitive electrical components, causing short circuits, thermal runaway, or isolation faults. These issues not only compromise the safety and reliability of the electrical energy storage but also result in costly repairs and potential hazards.

Examples of the present disclosure suggest a redundant shielding mechanism around the coolant channel, including a pre-assembled outer container filled with a sealant that is leak-proof. That is, a redundancy system in case of leakage is provided. Advantageously, examples herein effectively prevent coolant liquid from escaping the manifold and reaching the high-voltage components, thereby addressing issues with prior art.

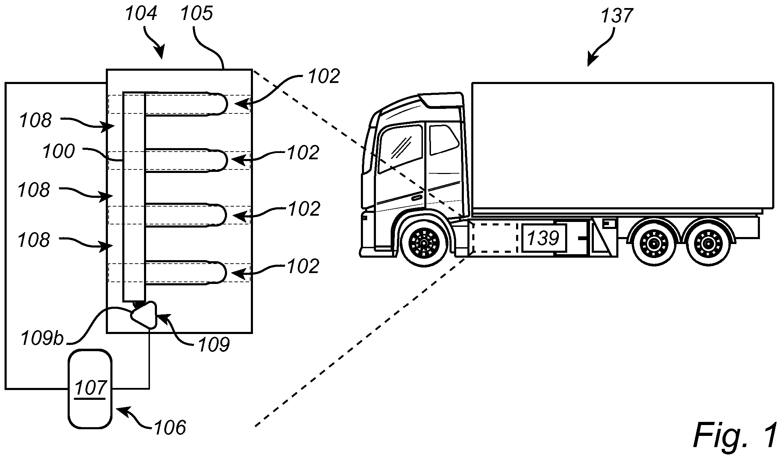

**FIG.** 1 illustrates an exemplary electrical energy storage pack 104 comprising an enclosure 105 housing a cooling system 102 for the electrical energy storage pack 104, and a coolant manifold 100 connected to the cooling system 102 according to an example. In this example, the coolant manifold 100 is configured to receive cooling liquid pumped from a reservoir 106, and transfer the cooling liquid 107 through coolant channels 110 in the manifold 100, to the cooling system 102. The coolant manifold 100 comprises an inlet 109 through which the channels 110 inside the manifold 100 receives the coolant liquid 107.

In fig 1, the coolant manifold is arranged to provide coolant 107 to the cooling system 102. However, a coolant manifold according to the present disclosure may equally be used to receive coolant at the outlet of the cooling system 102.

The cooling system may comprise cooling plates 102 arranged to cool electrical energy storage cells 108 inside the enclosure 105 of the electrical energy storage pack 104. The coolant is being provided from distribution channels in the manifold 100 to the cooling plates 102. The cooling plates may comprise an inlet and an outlet and an internal channel for circulating the cooling liquid. The cooling plates 102 may be interleaved or sandwiched or stacked with electrical energy storage cells 108 of the electrical energy storage pack 104. Another coolant manifold may be arranged at the coolant outlet of the cooling plates 102.

The coolant manifold 100 is preferably arranged inside the enclosure 105 of the electrical energy storage pack 104 in the space of the electrical energy storage cells 108. The electrical energy storage cells 108 includes a suitable chemistry such as based on Li-Ion technology.

The electrical energy storage pack 104 is comprised in a vehicle 137 here depicted as a truck with an electric engine 139. However, other vehicles are also applicable such as a buses, construction equipment, passenger cars, and marine vessels.

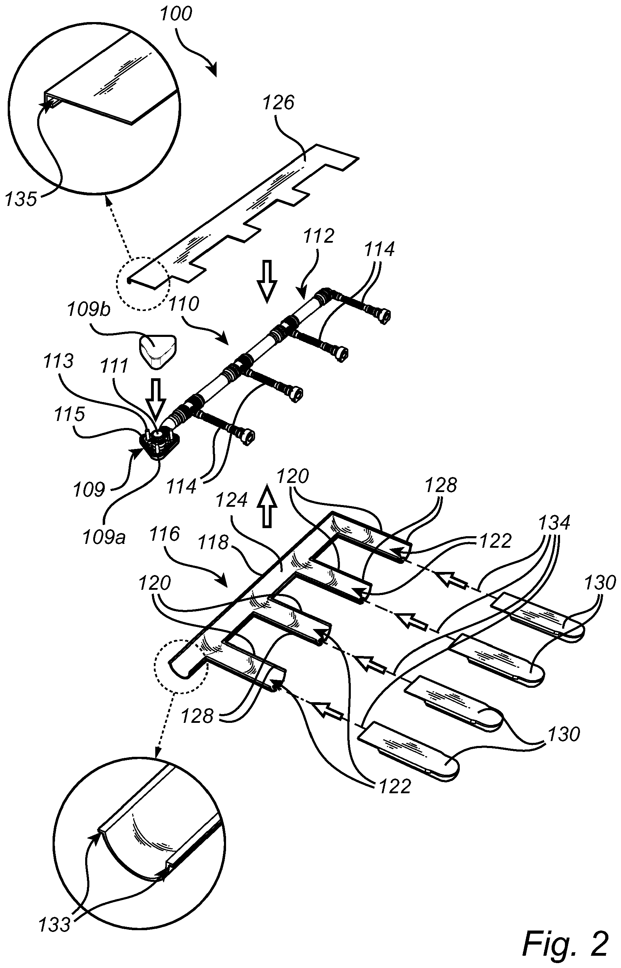

**FIG.** 2 is an exploded view of the coolant manifold 100.

The coolant manifold 100 comprises a coolant channel 110 comprising a main channel 112 and a set of distribution channels 114 fluidly connected with the main channel 112. The coolant channel 110 may be provided as a tube or pipe or hose made from a flexible material such as a plastic, rubber, or polymeric material. In case the manifold is arranged at the inlet of the cooling system, the main channel 112 is arranged to receive coolant liquid 107 from the reservoir 106 at an inlet 111 and transfer it to the multiple distribution channels 114. The multiple distribution channels 114 are configured to transfer the coolant liquid 107 to the cooling system 102 of the electrical energy storage pack 104. At the outlet of the cooling system, a coolant manifold according to the present disclosure may receive coolant from the cooling plates at the distribution channels 114 and transfer it to a cooling liquid reservoir 106 via the main channel 112 and the inlet 111.

The inlet 111 of the main channel 112 is configured to reach through a side wall of the enclosure 105 of the electrical energy storage pack 104 housing the cells 108 and cooling plates 102. The inlet 111 is covered by the manifold inlet 109 comprising an inner part 109a and an outer part 109b. The inner part 109a is configured to be arranged inside the enclosure 105 and the outer part 109b, serving as a lid, is configured to be arranged outside the enclosure 105. The inner part 109a and the outer part 109b are attached to each other through screws or bolts 113 that reach through the wall of the enclosure 105. The inner part 109a and the outer part 109b are sealed against the enclosure 105 to prevent leakage using suitable sealing components 115.

The set of distribution channels 114 may be connected to the main channel 112 using for example spigots or other connection types such as T-connections. Alternatively, the main channel 112 and the distribution channels 114 are made in one piece.

The coolant manifold 100 further comprises a container 116 configured to hold the coolant channel 110. The container 116 has a shape including a base 118 configured to hold the main channel 112, and a set of extensions 120 from the base 118 configured to hold the distribution channels 114 of the coolant channel 110. The extensions 120 each has an end opening 122 opposite from the base 118. The extensions 120 reach in a direction away from the base 118, nearly orthogonally, although other angles are also envisaged. The extensions 120 are meant to house the distribution channels 114 and its spatial relation with the base 118 thus mimics the spatial relation of the distribution channels 114 with the main channel 112. For example, the distance between neighboring extensions 120 may be substantially the same as the distance between neighboring distribution channels 114.

The container 116 has an opening 124 through which the coolant channel 110 can be received. A lid 126 is configured to cover the opening of at least the base 118 of the container 116. The lid 126 may leave the distal-most part 128 of the extensions 120 open.

A set of end caps 130 are configured to seal the end openings 122 of the extensions 120 of the container 116. The end caps 130 partly overlap with the lid 126 to ensure that the entire opening 124 of the container is covered. The end caps 130 slide onto the distal-most part 128 of the extensions 120 along the longitudinal axis 134 of the extensions 120.

The container 116 including the extensions 120 comprise an edge 133 with which the lid 126 may be connected. The edge 133 is a planar edge the extends in the same plane for the entire container such that the lid 126 fits tightly on the container 116. The lid 126 comprises a slot 135 that is configured to receive the edge 133 for attaching the lid 126 to the container 116. The lid 126 is slid on from the left, here the rear side of the container opposite the extensions 120, to the right in fig 2. The other side of the lid 126 will be secured by the end caps 130 as they overlap the lid 126 from the right.

To provide a secure sealing, a sealant at least partly fills a space inside the container 116.

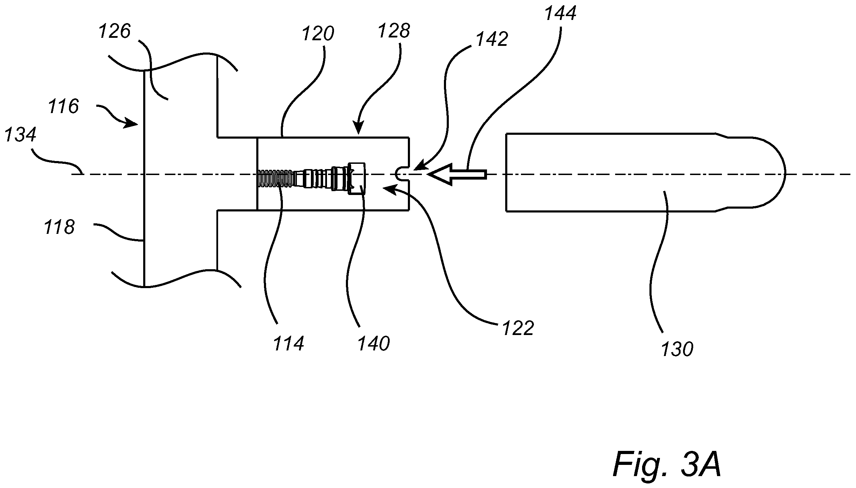

**FIG. 3A** is a top view of an extension 120 of a container 116 partly closed by the lid 126. The lid 126 leaves the distal part 128 of the extension 120 open. A coolant channel 110 is arranged in the container 116 of which a distribution channel 114 is located in the extension 120. A connection piece 140, such as a spigot 140, is attached to the distribution channel 114 for connection with a connection channel into the cooling system 102. A connection channel may be provided as a tube, pipe, or hose that provide a fluid connection between the distribution channel and the cooling system 102 via the spigot.

At a bottom of the extension 120 of the container 116 an opening 142 forms a feedthrough or aperture for the connection channel (not shown) that connects with the spigot 140. The spigot 140 of the distribution channel 114 that will be fitted with the connection channels is housed inside the end cap 130 once the end cap 130 is slid onto the extension 120 along axis 134 in the direction 144 towards the base 118. In the final assembly, the spigot 140 is covered with a sealant. In fact, the sealant preferably fills at least the space inside the end caps 130.

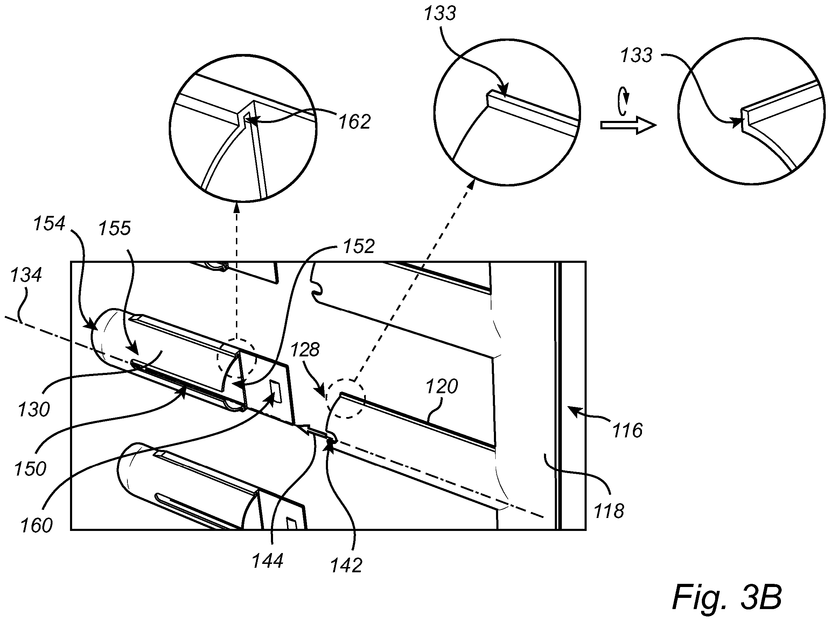

**FIG. 3B** is a bottom view of the extension 120 of the container 116 and the end cap 130 in fig. 3A. The end cap 130 comprises an opening 150 or aperture that together with the opening 142 in the extension 120 forms a feedthrough for the connection channel to the cooling system 102. The opening 142 in the extension 120 is a cut-out in the bottom of the extension 120, in the distal-part 128 and the opening 150 in the end-cap 130 is a slot 150 that reach from a first end 152 of the end cap 130 towards a second end 154 opposite from the first end 152. The slot 150 overlaps with the opening 142 in the extension 120 of the container 116 to form the feedthrough for a connection channel to the cooling system 102. It is the distal end 155 of the slot 150 near the second, distal, end 154 of the end-cap 130 that jointly forms the feedthrough with the cut-out or opening 142 in the extension 120. The first end 152 face towards the base 118 of the container 116 when the end-cap is attached on the extension 120.

A protrusion 160 on the end cap 130 that faces towards the lid 126 once slid in place on the extension provides for a friction lock to the lid 126 to main the end cap fixed to the extension. Alternatively, the protrusion 160 locks in a hole or cavity or recess in the lid 126.

Furthermore, the end caps 130 are connected to the edge 133 of the extension. The end caps 130 comprises a slot 162 that slides onto the edge 133.

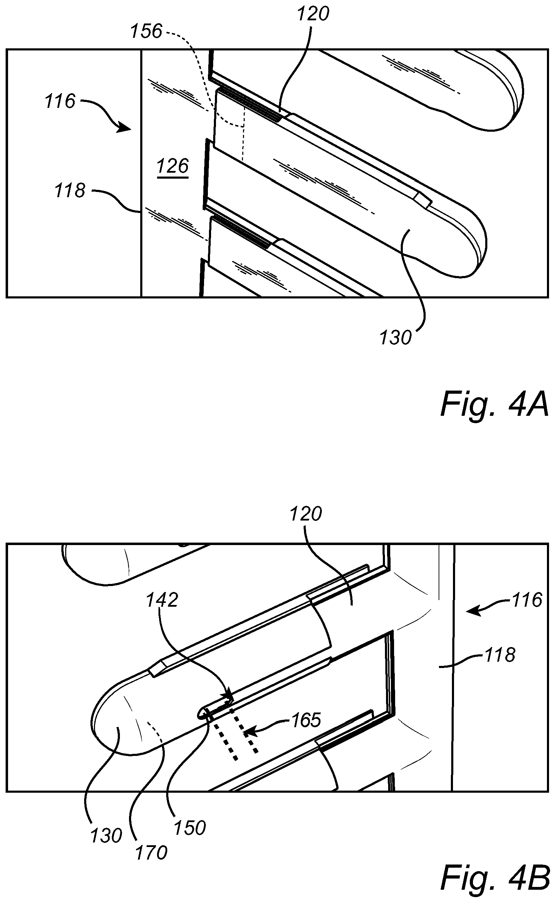

**FIG. 4A** illustrates a top view of the extension 120 of the container 116 closed by the lid 126 and the end cap 130. Thus, the end cap 130 has been slid onto the extension 120 to enclose the spigot inside and encapsulated in a sealant. The end cap 130 is arranged on top of the lid 126 at the overlap 156 between the end cap 130 and the lid 126. Thus, the end cap 130 is slid onto the extension 120 of the container sufficiently long to cover part of the lid 126.

**FIG. 4B** illustrates a bottom view of the extension 120 of the container 116 closed by the lid 126 and the end cap 130. The feedthrough is formed by the slot 150 and the cut-out 142 in the extension 120 through which a connection channel 165 (schematically shown) may connect to the distribution channel 114. The end caps 130, and preferably also the container 116 is filled with a sealant 170.

The sealant 170 may be filled in the container 116 and/or the end caps 130 prior to sliding the end caps 130 onto the extensions 120. The sealant may alternatively be filled through the feedthrough formed by the slot 150 and the cut-out 142. As a further alternative, the end caps 130 may comprise an additional through-hole configured to receive the sealant for at least partly filling the space. The additional through-hole may be a dedicated sealant filling hole.

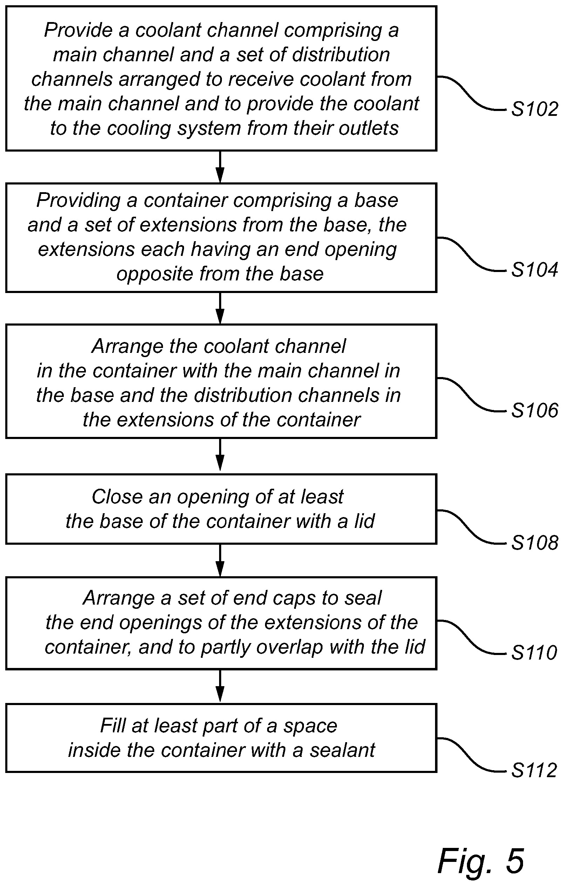

**FIG. 5** is a flow-chart of method steps according to an example. The method is for assembling a coolant manifold 100 connectable to a cooling system 102 of an electrical energy storage pack 104.

In step S102, providing a coolant channel 110 comprising a main channel 112 and a set of distribution channels 114 configured to be fluidly connected with the main channel 112 and configured to be fluidly connected with the cooling system 102 from their outlets.

In step S104, providing a container 116 comprising a base 118 and a set of extensions 120 from the base 118. The extensions 120 each having an end opening 122 opposite from the base 118.

In step S106, arranging the coolant channel 110 in the container 116 with the main channel 112 in the base 118 and the distribution channels 114 in the extensions 120 of the container 116.

In step S 108, closing an opening 124 of at least the base of the container 116 with a lid 126. A sealant may be applied to fill the container 116 before the lid is attached to the container 116.

In step S 110, arranging a set of end caps 130 to seal the end openings 122 of the extensions 120 of the container, and to partly overlap with the lid 126. The end-caps 130 may be slid onto the extensions along an axis parallel with a longitudinal axis 134 of the extension 120. The sealant may be filled in the end-caps 130 before closing the end opening of the extensions 120 with the end-caps 130. In this way, an additional spigot may be avoided for connecting to an external connection channel that connects to the cooling system 102.

In step S112, filling at least part of a space inside the container 116 with a sealant. Preferably, the sealant is filled to at least cover a spigot 140 of the distribution channels 114 fitted with connection channels inside the end caps 130. Still further, it is preferred to fill the space with the sealant subsequently to arranging the end caps 130 at the end openings 122 of the extensions 114.

In order to ensure proper filling of the space inside the container 116, or at least the end caps 130, the sealant may be a curable fluid. For example, the sealant may be silicone or a liquid resistant foam.

The container, lid, and end-caps may be made from a polymer, such as a plastic material.

Example 1: A coolant manifold connectable to a cooling system of an electrical energy storage pack, the coolant manifold comprising: a coolant channel comprising a main channel and a set of distribution channels configured to be fluidly connected with the main channel and configured to be fluidly connected with the cooling system, a container configured to hold the coolant channel, the container comprising a base configured to hold the main channel, and a set of extensions from the base configured to hold the distribution channels of the coolant channel, the extensions each having an end opening opposite from the base; a lid configured to cover an opening of at least the base of the container; a set of end caps configured to seal the end openings of the extensions of the container, and to partly overlap with the lid, and a sealant that at least partly fills a space inside the container.

Example 2: The coolant manifold of example 1, wherein the end caps are configured to slide into the extensions of the container.

Example 3: The coolant manifold of any of examples 1-2, wherein the end caps comprise an opening for feedthrough of connection channels configured as a fluid connection between the distribution channels and the cooling system.

Example 4: The coolant manifold of example 3, wherein a spigot of the distribution channels is configured to be fitted with connection channels are housed inside the end caps.

Example 5: The coolant manifold of example 4, wherein at least the spigot is covered with the sealant.

Example 6: The coolant manifold of any of examples 3-5, wherein the opening in the end cap is a slot that reach from a first end of the end cap towards a second end opposite from the first end, the slot overlaps with an opening in the extensions of the container to form the feedthrough.

Example 7: The coolant manifold of any of examples 1-6, wherein the ends caps are arranged on top of the lid at the overlap between the end caps and the lid.

Example 8: The coolant manifold of any of examples 1-7, wherein at least spaces of the end caps are filled with the sealant.

Example 9: The coolant manifold of any of examples 1-8, the container further comprising an edge that is configured to connect with the lid to lock the lid on the container.

Example 10: The coolant manifold of example 9, wherein the end caps are connected to the edge.

Example 11: The coolant manifold of any of examples 1-10, wherein the end caps comprise a through-hole configured to receive the sealant for at least partly filling the space.

Example 12: The coolant manifold of any of examples 1-11, arranged inside a housing of the electrical energy storage pack.

Example 13: An electrical energy storage pack comprising a cooling system for the electrical energy storage packs and the coolant manifold of any of examples 1-12.

Example 14: The electrical energy storage pack of examples 13, wherein the cooling system comprises cooling plates arranged to cool electrical energy storage cells of the electrical energy storage pack, the coolant being provided from the distribution channels to the cooling plates.

Example 15: A vehicle comprising the electrical energy storage pack according to any of example 12-13.

Example 16: A method for assembling a coolant manifold connectable to a cooling system of an electrical energy storage pack, the method comprising: providing a coolant channel comprising a main channel and a set of distribution channels configured to be fluidly connected with the main channel and configured to be fluidly connected with the cooling system from their outlets, providing a container comprising a base and a set of extensions from the base, the extensions each having an end opening opposite from the base; arranging the coolant channel in the container with the main channel in the base and the distribution channels in the extensions of the container, closing an opening of at least the base of the container with a lid, arranging a set of end caps to seal the end openings of the extensions of the container, and to partly overlap with the lid, and filling at least part of a space inside the container with a sealant.

Example 17: The method of example 16, comprising: sliding the set of ends caps into the extensions of the container.

Example 18: The method of any of examples 16-17, comprising: filling the sealant to at least cover a spigot of the distribution channels fitted with connection channels inside the end caps.

Example 19: The method of any of examples 16-18, comprising filling of the space with sealant subsequently to arranging the end caps at the end openings of the extensions.

Example 20: The method of any of examples 16-19, wherein the sealant is a curable fluid.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A coolant manifold (100) connectable to a cooling system (102) of an electrical energy storage pack (104), the coolant manifold comprising:
a coolant channel (110) comprising a main channel (112) and a set of distribution channels (114) configured to be fluidly connected with the main channel (112) and configured to be fluidly connected with the cooling system (102),
a container (116) configured to hold the coolant channel, the container comprising a base (118) configured to hold the main channel (112), and a set of extensions (120) from the base (118) configured to hold the distribution channels (114) of the coolant channel (110), the extensions each having an end opening (122) opposite from the base;
a lid (126) configured to cover an opening (124) of at least the base (118) of the container (116);
a set of end caps (130) configured to seal the end openings (122) of the extensions (120) of the container (116), and to partly overlap with the lid, and
a sealant that at least partly fills a space inside the container (116).

2. The coolant manifold of claim 1, wherein the end caps are configured to slide into the extensions of the container.

3. The coolant manifold of any of claims 1-2, wherein the end caps comprise an opening (150) for feedthrough of connection channels (165) configured as a fluid connection between the distribution channels and the cooling system (102).

4. The coolant manifold of claim 3, wherein a spigot (140) of the distribution channels configured to be fitted with connection channels are housed inside the end caps.

5. The coolant manifold of claim 4, wherein at least the spigot is covered with the sealant.

6. The coolant manifold of any of claims 3-5, wherein the opening in the end cap is a slot that reach from a first end (152) of the end cap towards a second end (154) opposite from the first end, the slot overlaps with an opening (142) in the extensions of the container to form the feedthrough.

7. The coolant manifold of any of claims 1-6, wherein the ends caps are arranged on top of the lid at the overlap between the end caps and the lid.

8. The coolant manifold of any of claims 1-7, wherein at least spaces of the end caps are filled with the sealant.

9. The coolant manifold of any of claims 1-8, the container further comprising an edge that is configured to connect with the lid to lock the lid on the container.

10. The coolant manifold of claim 9, wherein the end caps are connected to the edge.

11. The coolant manifold of any of claims 1-10, wherein the end caps comprise a through-hole configured to receive the sealant for at least partly filling the space.

12. An electrical energy storage pack (104) comprising a cooling system for the electrical energy storage packs and the coolant manifold of any of claims 1-11.

13. The electrical energy storage pack according to claim 12, wherein the cooling system comprises cooling plates arranged to cool electrical energy storage cells of the electrical energy storage pack, the coolant being provided from the distribution channels to the cooling plates.

14. A vehicle (139) comprising the electrical energy storage pack according to any of claims 12-13.

15. A method for assembling a coolant manifold connectable to a cooling system of an electrical energy storage pack, the method comprising:
providing (S102) a coolant channel comprising a main channel and a set of distribution channels configured to be fluidly connected with the main channel and configure to be fluidly connected with the provide the coolant to the cooling system from their outlets,
providing (S 104) a container comprising a base and a set of extensions from the base, the extensions each having an end opening opposite from the base;
arranging (S106) the coolant channel in the container with the main channel in the base and the distribution channels in the extensions of the container,
closing (S 108) an opening of at least the base of the container with a lid,
arranging (S110) a set of end caps to seal the end openings of the extensions of the container, and to partly overlap with the lid, and
filling (S112) at least part of a space inside the container with a sealant.
